# EUROPÄISCHE PATENTSCHRIFT

(11) **EP 2 483 597 B1**
(45) Veröffentlichungstag und Bekanntmachung des Hinweises auf die Patenterteilung: **11.11.2015**
(21) Anmeldenummer: 10790738.8
(22) Anmeldetag: 29.09.2010
(51) Int. Cl.: F21V 5/00, F21Y 101/02

(54) **BELEUCHTUNGSANORDNUNG MIT LICHTBEEINFLUSSUNGSELEMENT**
LIGHTING DEVICE AND LIGHT INFLUENCING ELEMENT
DISPOSITIF D'ECLAIRAGE ET ELEMENT INFLUENCANT LA LUMIERE

(30) Priorität: 29.09.2009 DE 202009013088 U
(43) Veröffentlichungstag der Anmeldung: 08.08.2012
(73) Patentinhaber: Zumtobel Lighting GmbH, 6850 Dornbirn (AT)
(72) Erfinder: LADSTÄTTER, Gerald, A-6833 Klaus (AT); ERHARD, Manuel, A-6714 Nüziders (AT); FRICK, Joachim, A-6833 Klaus (AT); KELLER, Katharina, 88161 Lindau (DE); SCHUBNELL, Sebastian, 88079 Kressbronn (DE)
(74) Vertreter: Thun, Clemens
(86) Internationale Anmeldenummer: PCT/EP2010/064484
(87) Internationale Veröffentlichungsnummer: WO 2011/039272

(56) Entgegenhaltungen:
- EP-A1- 1 586 813
- EP-A2- 0 377 309
- WO-A1-2008/139386
- WO-A1-2008/142877
- DE-A1-102006 027 207
- US-A- 5 530 628
- US-A1- 2001 028 564

## Beschreibung

Die vorliegende Erfindung betrifft eine Beleuchtungsanordnung mit mindestens einer Lichtquelle und einem Lichtbeeinflussungselement, das Mittel zur gleichmäßigen Verteilung des von der Lichtquelle abgegebenen Lichts über das gesamte Lichtbeeinflussungselement aufweist, sowie ein entsprechendes Lichtbeeinflussungselement.

Bei flächigen Leuchten, die mehrere Lichtquellen, insbesondere punktförmige Lichtquellen, aufweisen, ergibt sich das Problem, dass diese Lichtquellen für einen Beobachter einzeln wahrnehmbar sind, was jedoch häufig nicht gewünscht ist. Um dies zu verhindern, ist häufig vorgesehen, dass derartige Leuchten ein optisches Element bzw. Lichtbeeinflussungselement aufweisen, welches eine Auflösung der einzelnen Lichtquellen bewirkt und eine im Wesentlichen gleichmäßige Lichtabgabe über die gesamte Leuchte gewährleistet. Aus der internationalen Anmeldung WO 02/44612 A2 ist bspw. eine derartige Anordnung bekannt, bei der vor den Lichtquellen eine lichtdurchlässige Scheibe angeordnet ist, die eine Mikroprismenstruktur und insbesondere auch sogenannte Lichtvergleichmäßigungsmittel aufweist. Diese Lichtvergleichmäßigungsmittel bewirken, dass die Leuchtdichte über die gesamte Abstrahlfläche der Leuchte etwa gleich groß ist.

Bei derartigen Anordnungen wird nun das Licht über die gesamte Lichtabgabefläche des Lichtbeeinflussungselements gleichmäßig abgegeben was bei einfachen Flächenleuchten häufig auch gewünscht und gewollt ist. Falls jedoch mit derartigen flächigen Leuchten auch aufwendigere lichttechnische Aufgaben erfüllt werden sollen, ist dies mit den oben angeführten einfach ausgestalteten Lichtbeeinflussungselementen nicht ohne Weiteres möglich.

Aus DE 10 2006 027 207 ist eine Beleuchtungsanordnung mit Lichtbeeinflussungselement bekannt.

Der vorliegenden Erfindung liegt dementsprechend die Aufgabe zugrunde, eine Beleuchtungsanordnung bzw. ein Lichtbeeinflussungselement zu entwickeln, die bzw. das auch in der Lage ist, aufwendigere und kompliziertere Beleuchtungsaufgaben zu erfüllen.

Die Aufgabe wird durch eine Beleuchtungsanordnung gemäß Anspruch 6 und durch ein Lichtbeeinflussungselement gemäß Anspruch 1 gelöst. Vorteilhafte Weiterbildungen der Erfindung sind Gegenstand der abhängigen Ansprüche.

Erfindungsgemäß wird eine Beleuchtungsanordnung vorgeschlagen, die mindestens eine - vorzugsweise punktförmige - Lichtquelle und ein in Abstrahlrichtung vor der Lichtquelle angeordnetes Lichtbeeinflussungselement aufweist. Das Lichtbeeinflussungselement weist hierbei sowohl Mittel zur im Wesentlichen gleichmäßigen Verteilung des von der Lichtquelle abgegebenen Lichts über das gesamte Lichtbeeinflussungselement als auch Mittel auf, welche die Lichtabstrahlfläche des Lichtbeeinflussungselements in mindestens zwei Bereiche unterteilen, die unterschiedliche lichtbeeinflussende Eigenschaften aufweisend.

Vorzugsweise wird durch die weiteren Mittel zur Unterteilung der Lichtabstrahlfläche das Licht über einen ersten Bereich, der im Zentrum des Lichtbeeinflussungselements angeordnet ist, gerichtet und entblendet, und über einen zweiten Bereich, der in den Randbereichen des Lichtbeeinflussungselements angeordnet ist, diffus abgegeben. Insbesondere kann hierbei vorgesehen sein, dass die Bereiche optisch voneinander getrennt sind, wobei diese Trennung beispielsweise durch einen aufgedruckten lichtundurchlässigen Rahmen gebildet sein kann.

Durch das erfindungsgemäß ausgestaltete Lichtbeeinflussungseleinent ist es nun möglich, dass das Licht von punktförmigen Lichtquellen, insbesondere Leuchtdioden, zum einen im Wesentlichen gleichmäßig über die gesamte Lichtaustrittsfläche des Lichtbeeinflussungselements abgegeben wird, gleichzeitig aber auch zwei unterschiedliche Beleuchtungsaufgaben erfüllt werden können. So wird zum einen über den zentralen Bereich gerichtetes und entblendetes Licht abgegeben, das bspw. einen Arbeitsplatz an einem Schreibtisch besonders beleuchtet, zum anderen wird gleichzeitig aber auch durch die Randbereiche der gesamte Raum in dem der Schreibtisch steht, mit diffusem Licht aufgehellt.

Gemäß vorteilhafter Weiterbildungen der Erfindung kann desweiteren vorgesehen sein, dass die Mittel zur Unterteilung der Lichtabstrahlfläche aus einer Mikroprismenstrukturplatte in Kombination mit einer diffusen Folie oder aber aus einer Platte bzw. Folie, die im zentralen Bereich Prismenstrukturen bzw. Mikroprismenstrukturen und in den Randbereichen eine Struktur aufweist, durch die Licht diffus abgegeben werden kann, bestehen. Die Mittel zur Vergleichmäßigung der Leuchtdichte können dagegen aus zwei gekreuzt angeordneten Lentikularfolien oder aber durch eine strukturierte Folie, die eine gitterförmige Anordnung von Pyramiden bzw. kegelförmigen Elementen aufweist, gebildet sein.

Zusätzlich kann auch noch eine lichtstreuende Folie bzw. Scheibe vorgesehen sein, die Interferenzen, welche evtl. durch die weiteren Mittel zur gleichmäßigen Verteilung und die Mittel zur Unterteilung der Lichtabstrahlfläche entstehen können, ausgleicht bzw. unterdrückt. Diese Interferenzen ergeben sich durch die besondere Ausgestaltung der Mittel zur gleichmäßigen Verteilung und der Mittel zur Unterteilung der Lichtabstrahlfläche und werden auch als Moirè-Effekt bezeichnet, welcher bereits ausführlich bspw. in der WO 2008/139386 Albeschrieben ist, weshalb hier nicht weiter darauf eingegangen wird.

Bei einer weiteren bevorzugten Ausführungsform der Erfindung kann vorgesehen sein, dass an der der Lichtabstrahlfläche zugehörigen Außenseite des Lichtbeeinflussungselements eine transparente Platte vorgesehen ist, die bspw. aus Kunststoff, insbesondere PMMA, bestehen kann. Eine derartige möglichst glatt ausgeführte Platte kann nun zum einen die anderen Teile bzw. Schichten des Lichtbeeinflussungselements vor von außen auf die Beleuchtungsanordnung treffenden Umwelteinflüssen schützen und zum anderen dem Benutzer bzw. Betrachter der Beleuchtungsanordnung einen harmonischen und glatten Eindruck vermitteln. Zusätzlich trägt eine derartige transparente, insbesondere glatte, Kunststoffplatte zu einer besonders einfachen Reinigung der Beleuchtungsanordnung bei.

Bei einer weiteren Ausgestaltungsform der Erfindung kann vorgesehen sein, dass das Lichtbeeinflussungselement rechteckig oder quadratisch geformt ist und die Mittel, Platten und Folien des Lichtbeeinflussungselements die gleichen Abmessungen aufweisen. Insbesondere durch die gleiche Größe der Mittel, Platten und Folien wird der Aufbau und die Montage der Beleuchtungsanordnung deutlich erleichtert, da ein gegenseitiges Verschieben ausgeschlossen ist bzw. zumindest auf einen sehr geringen Bereich reduziert wird.

Nachfolgend soll die Erfindung anhand von Ausführungsbeispielen und der beiliegenden Zeichnung näher erläutert werden. Es zeigen:
- Fig. 1: eine schematische Darstellung eines Querschnitts der erfindungsgemäßen Beleuchtungsanordnung;
- Fig. 2: eine schematische Darstellung der Lichtabstrahlfläche des erfindungsgemäßen Lichtbeeinflussungselements.

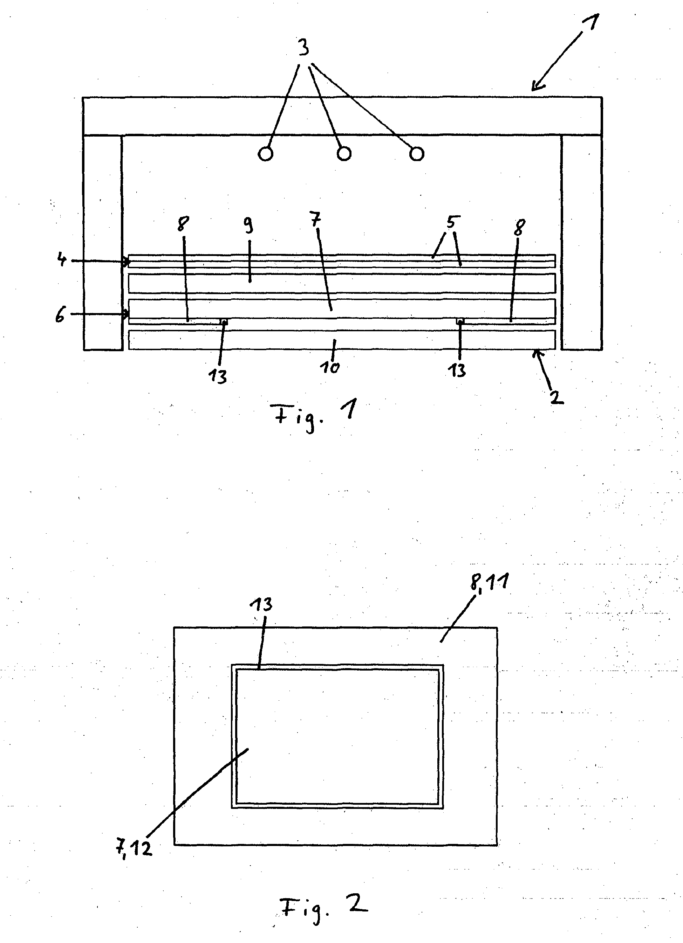

In Fig. 1 ist schematisch eine erfindungsgemäße Beleuchtungsanordnung 1 mit einem erfindungsgemäßen Lichtbeeinflussungselement 2 im Querschnitt dargestellt. Die Beleuchtungsanordnung 1 weist hierbei mehrere, vorzugsweise primär in einem zentralen Bereich des Gehäuses der Beleuchtungsanordnung 1 matrix-artig angeordnete Leuchtdioden 3 auf, wobei das Lichtbeeinflussungselement 2 in Abstrahlrichtung vor den Leuchtdioden 3 angeordnet ist.

Das Lichtbeeinflussungselement 2 besteht nun aus mehreren Folien bzw. Platten, die sandwichartig bzw. schichtweise angeordnet sind. Von der den Leuchtdioden 3 zugewandten Seite beginnend weist das Lichtbeeinflussungselement 2 zunächst Mittel 4 zur gleichmäßigen Verteilung des von Leuchtdioden 3, abgegebenen Lichts über das gesamte Lichtbeeinflussungselement 2 auf, wobei sich diese Mittel 4 hier aus zwei gekreuzt angeordneten Lentikularfolien 5 zusammensetzen. Mit Hilfe dieser Lentikularfolien 5 wird nun das von den Leuchtdioden 3 punktförmig abgegebene Licht aufgelöst und gleichmäßig über das gesamte Lichtbeeinflussungselement 2 verteilt.

Im Anschluss an die Lentikularfolien 5 ist bei dem erfindungsgemäßen Lichtbeeinflussungselement 2 dann eine lichtstreuende Folie bzw. Scheibe 9 angeordnet, welche dazu vorgesehen ist, die - wie bereits oben beschrieben - durch den Moire-Effekt entstehenden evtl. Interferenzen zu unterbinden.

Nach dieser lichtstreuenden Folie bzw. Scheibe 9 sind die weiteren Mittel 6 zur Unterteilung der Lichtabstrahlfläche vorgesehen. Die weiteren Mittel 6 zur Unterteilung der Lichtabstrahlfläche bestehen in der gezeigten Ausführungsform aus einer Mikroprismenstrukturplatte 7 und einer diffusen Folie 8.

Die Mikroprismenstrukturplatte 7 ist, wie auch die Lentikularfolien 5 und die lichtstreuende Folie bzw. Scheibe 9 flächig ohne jegliche Öffnungen und Aussparungen ausgestaltet. Im Gegensatz hierzu weist die diffuse Folie 8 einen zentralen Ausschnitt 12 auf. In Fig. 2 ist bspw. eine derartige Ausgestaltung aufgezeigt. Hierbei weist die rechteckige diffuse Folie 8 mittig einen rechteckigen Ausschnitt bzw. eine Aussparung 12 auf, wodurch in diesem Bereich keine diffuse Folie 8 vorhanden ist und lediglich die Mikroprismenstrukturplatte 7 das Licht entsprechend beeinflusst.

Somit ergibt sich für die erfindungsgemäße Beleuchtungsanordnung 1 eine Lichtabstrahlfläche mit zwei unterschiedliche lichtbeeinflussende Eigenschaften aufweisenden Bereichen 11, 12, wobei in einem ersten, zentralen Bereich 12 das Licht gerichtet und entblendet abgegeben wird und in einem zweiten Bereich 11 diffus. Der erste Bereich 12 entspricht dem rechteckigen Ausschnitt 12 der diffusen Folie 8, weshalb in diesem Bereich das Licht lediglich von der Mikroprismenstrukturplatte 7 beeinflusst wird. Bei dem zweiten Bereich 11 handelt es sich um die umgebenden Randbereiche des Lichtbeeinflussungselements 2, in denen auch die diffuse Folie 8 angeordnet ist, welche das durch die Mikroprismenstrukturplatte 7 gerichtete und entblendete Licht wieder in diffuses Licht wandelt.

Um eine klare optische Abtrennung der beiden Bereiche 11, 12 zu ermöglichen, ist auf der diffusen Folie 8 an den inneren Rändern ein vorzugsweise vollständig lichtundurchlässiger Rahmen 13 aufgedruckt, der eine optimale optische Trennung zwischen den beiden Bereichen 11, 12 ermöglicht.

Zuletzt und somit an der Außenseite des erfindungsgemäßen Lichtbeeinflussungselements 2 ist noch eine transparente Kunststoffplatte 10 angeordnet, die eine glatte Oberfläche aufweist, wodurch ihre Reinigung von außen deutlich vereinfacht wird. Zusätzlich ermöglicht sie einen sauberen und glatten Abschluss des Lichtbeeinflussungselements 2, wodurch die gesamte Beleuchtungsanordnung 1 ein homogenes Bild für den Betrachter bzw. Benutzer ergibt.

Die äußeren Abmessungen der einzelnen Teile des Lichtbeeinflussungselements 2 sind alle identisch ausgestaltet. Hierdurch ergibt sich die Möglichkeit, dass die Folien bzw. Platten durch einen Aluminiumrahmen gehalten werden und sich nicht verschieben können. Durch diese Ausgestaltung wird auch der Aufwand bei der Montage deutlich verringert. Zusätzlich ist auch kein mechanischer innerer Rahmen erforderlich.

Die in den Fig. 1 und 2 gezeigte Ausführungsform der erfindungsgemäßen Beleuchtungsanordnung 1 bzw. des erfindungsgemäßen Lichtbeeinflussungselements 2 stellt lediglich eine Möglichkeit der Erfindung dar. So wäre auch vorstellbar, dass anstatt der zwei verwendeten Lentikularfolien 5 eine einzige Folie zum Einsatz kommt, welche die Aufgabe der beiden Lentikularfolien 5 erfüllt. Desweiteren ist es auch nicht zwingend erforderlich, dass die Mikroprismenstrukturplatte 7 in Verbindung mit der diffusen Folie 8 zum Einsatz kommt. Anstelle dieser beiden Teile könnte auch eine einzige Platte zum Einsatz kommen, die in einem ersten, zentralen Bereich eine Mikroprismenstruktur aufweist und an den Rändern in einem zweiten Bereich eine Struktur, durch die das Licht diffus abgegeben werden kann. Ebenso ist es möglich, dass die Lentikularfolie 5 und die lichtstreuende Folie bzw. Scheibe 9 als einstückiges Bauteil ausgeführt sind, welches die entsprechenden Aufgaben der einzelnen Bauteile erfüllt.

## Patentansprüche

1. Lichtbeeinflussungselement (2) mit Mitteln (4) zur gleichmäßigen Verteilung des von einer beabstandet von dem Lichtbeeinflussungselement (2) angeordneten Lichtquelle abgegebenen Lichts und weiteren Mitteln (6), durch welche die Lichtabstrahlfläche des Lichtbeeinflussungselements (2) in mindestens zwei unterschiedliche Bereiche (11, 12) unterteilt wird, welche unterschiedliche lichtbeeinflussende Eigenschaften aufweisen,
wobei das Lichtbeeinflussungselement (2) aus mehreren Folien bzw. Platten besteht, die sandwichartig bzw. schichtweise angeordnet sind,
und wobei die weiteren Mittel (6) zur Unterteilung der Lichtabstrahlfläche derart ausgebildet sind, dass Licht über einen ersten Bereich (12) gerichtet und entblendet und über einen zweiten Bereich (11) diffus abgegeben wird, wobei
die beiden Bereiche (11, 12) optisch voneinander getrennt sind und vorzugsweise der erste Bereich (12) im Zentrum des Lichtbeeinflussungselements (2) und der zweite Bereich (11) in den Randbereichen des Lichtbeeinflussungselements (2) angeordnet ist
**dadurch gekennzeichnet,**
**dass** die weiteren Mittel (6) zur Unterteilung der Lichtabstrahlfläche aus einer Platte bzw. Folie (7) mit Prismenstrukturen, insbesondere Mikroprismenstrukturen, und einer diffusen Folie (8) gebildet sind, wobei die diffuse Folie (8) lediglich im zweiten Bereich (11) angeordnet ist,
oder dass die weiteren Mittel (6) zur Unterteilung der Lichtabstrahlfläche aus einer Platte bzw. Folie bestehen, die im ersten Bereich Prismenstrukturen, insbesondere Mikroprismenstrukturen, und im zweiten Bereich eine Struktur aufweist, durch die Licht diffus abgegeben wird.

2. Lichtbeeinflussungselement nach Anspruch 1,
**dadurch gekennzeichnet,**
**dass** die optische Trennung durch einen aufgedruckten lichtundurchlässigen Rahmen (13) gebildet wird.

3. Lichtbeeinflussungselement nach einem der vorherigen Ansprüche,
**dadurch gekennzeichnet,**
**dass** die Mittel (4) zur gleichmäßigen Verteilung durch zwei gekreuzt angeordnete Lentikularfolien (5) gebildet werden,
oder dass die Mittel (4) zur gleichmäßigen Verteilung durch eine strukturierte Folie gebildet sind, die eine gitterförmige Anordnung von pyramiden- bzw. kegelförmigen Elementen aufweist.

4. Lichtbeeinflussungselement nach einem der vorherigen Ansprüche,
**dadurch gekennzeichnet,**
**dass** das Lichtbeeinflussungselement (2) eine lichtstreuende Folie bzw. Scheibe (9) aufweist, die derart ausgebildet und angeordnet ist, dass Interferenzen, die durch die Mittel (4) zur gleichmäßigen Verteilung und die weiteren Mittel (6) zur Unterteilung der Lichtabstrahlfläche entstehen, ausgeglichen bzw. unterdrückt werden.

5. Lichtbeeinflussungselement nach einem der vorherigen Ansprüche,
**dadurch gekennzeichnet,**
**dass** das Lichtbeeinflussungselement (2) rechteckig, quadratisch oder kreisrund geformt ist und die Mittel, Platten und Folien des Lichtbeeinflussungselements (2) die gleichen Abmessungen aufweisen.

6. Beleuchtungsanordnung (1) aufweisend
• mindestens eine, vorzugsweise punktförmige, Lichtquelle (3) und
• ein in Abstrahlrichtung vor der Lichtquelle (3) angeordnetes Lichtbeeinflussungselement (2) gemäß einem der vorherigen Ansprüche.

7. Beleuchtungsanordnung nach Anspruch 6,
**dadurch gekennzeichnet,**
**dass** an der der Lichtabstrahlfläche zugehörigen Außenseite des Lichtbeeinflussungselements (2) eine transparente Platte (10), insbesondere aus PMMA, angeordnet ist.

8. Beleuchtungsanordnung nach einem der Ansprüche 6-7,
**dadurch gekennzeichnet,**
**dass** die Lichtquelle (3) als Leuchtdiode ausgebildet ist.

## Claims

1. Light-influencing element (2) with means (4) for evenly distributing the light emitted by a light source arranged at a distance from the light-influencing element (2), and further means (6) through which the light-radiating area of the light-influencing element is divided into at least two different regions (11, 12) having different light-influencing properties, wherein the light-influencing element (2) consists of several sheets or boards arranged sandwich-like or in layers, and wherein the further means (6) for dividing the light-radiating area are formed in such a way that light is directed and subjected to glare-suppression via a first region (12) and emitted diffusely via a second region (11), wherein the two regions (11, 12) are optically separated from one another and the first region (12) preferably arranged in the center of the light-influencing element (2) and the second region (11) in the peripheral regions of the light-influencing element (2), **characterized in that** the further means (6) for dividing the light-radiating area consist of a board or sheet (7) with prism structures, especially micro prism structures, and a diffuse sheet (8), wherein the diffuse sheet (8) is merely arranged in the second region (11), or **in that** the further means (6) for dividing the light-radiating area consist of a board or sheet, which has prism structures, especially micro prism structures, in the first region, and in the second region has a structure through which light is emitted in a diffuse manner.

2. Light-influencing element according to claim 1, **characterized in that** the optical separation is formed by a printed, opaque frame (13).

3. Light-influencing element according to one of the preceding claims, **characterized in that** the means (4) for even distribution are formed by two lenticular sheets (5) arranged in a crossed manner, or **in that** the means (4) for even distribution are formed by a structured sheet having a lattice-shaped arrangement of pyramid-shaped or cone-shaped elements.

4. Light-influencing element according to one of the preceding claims, **characterized in that** the light-influencing element (2) has a light-diffusing sheet or disk (9) configured and arranged in such a way that interferences created by the means (4) for even distribution and the further means (6) for dividing the light-radiating area are cancelled or suppressed.

5. Light-influencing element according to one of the preceding claims, **characterized in that** the light-influencing element (2) is rectangular, square or circular and the means, boards and sheets of the light-influencing element (2) have the same dimensions.

6. Lighting arrangement (1) having
• at least one, preferably point-like, light source (3) and
• a light-influencing element (2) according to one of the preceding claims arranged in radiation direction in front of the light source (3).

7. Lighting arrangement according to claim 6, **characterized in that** a transparent board (10), especially made out of PMMA, is arranged on the external side of the light-radiating area, of the light-influencing element (2).

8. Lighting arrangement according to one of the claims 6 to 7, **characterized in that** the light source (3) is configured as light-emitting diode.

## Revendications

1. Élément agissant sur la lumière (2) comportant des moyens (4) servant à répartir uniformément la lumière émise par une source lumineuse disposée à une certaine distance de l'élément agissant sur la lumière (2) ainsi que des moyens supplémentaires (6) à travers lesquels la zone de rayonnement de la lumière de l'élément agissant sur la lumière est divisée en au moins deux zones différentes (11, 12) ayant des propriétés agissant sur la lumière différentes, l'élément agissant sur la lumière (2) consistant en plusieurs feuilles ou panneaux disposés en sandwich ou en couches,
et les moyens supplémentaires (6) servant à diviser la zone de rayonnement de la lumière étant réalisés de telle sorte que la lumière soit orientée vers, et soumise à une suppression de l'éblouissement par l'intermédiaire de, une première zone (12) et émise de façon diffuse par l'intermédiaire d'une seconde zone (11), les deux zones (11, 12) étant optiquement séparées l'une de l'autre et la première zone (12) étant, de préférence, disposée au centre de l'élément agissant sur la lumière (2) et la seconde zone (11) dans les zones périphériques de l'élément agissant sur la lumière (2),
**caractérisé en ce que** les moyens supplémentaires (6) servant à diviser la zone de rayonnement de la lumière consistent en un panneau ou feuille (7) ayant des structures en forme de prisme, plus particulièrement des structures en forme de micro-prisme et en une feuille servant à diffuser (8), dans lequel la feuille servant à diffuser (8) est simplement disposée dans la seconde zone (11),
ou **en ce que** les moyens supplémentaires (6) servant à diviser la zone de rayonnement consistent en un panneau ou feuille ayant des structures en forme de prisme, plus particulièrement des structures en forme de micro-prisme, dans la première zone, et qui, dans la seconde zone, possède une structure à travers laquelle la lumière est émise de façon diffuse.

2. Élément agissant sur la lumière selon la revendication 1, **caractérisé en ce que** la séparation optique est formée par un cadre imprimé opaque (13).

3. Élément agissant sur la lumière selon l'une des revendications précédentes, **caractérisé en ce que** les moyens (4) destinés à une répartition uniforme sont formés par deux feuilles lenticulaires (5) disposées de manière entrecroisée,
ou **en ce que** les moyens (4) destinés à une répartition uniforme sont formés par une feuille structurée ayant un agencement en forme de grille d'éléments de forme pyramidale ou conique.

4. Élément agissant sur la lumière selon l'une des revendications précédentes, **caractérisé en ce que** l'élément agissant sur la lumière (2) possède une feuille ou disque diffusant la lumière (9) configurée et disposée de manière à ce que des interférences, créées par les moyens (4) destinés à une répartition uniforme et par les moyens supplémentaires (6) destinés à diviser la zone de rayonnement de la lumière, sont annulées ou supprimées.

5. Élément agissant sur la lumière selon l'une des revendications précédentes, **caractérisé en ce que** l'élément agissant sur la lumière (2) est rectangulaire, carré ou circulaire et les moyens, panneaux et feuilles de l'élément agissant sur la lumière (2) possèdent les mêmes dimensions.

6. Agencement d'éclairage (1) ayant
• au moins une source lumineuse (3) de préférence punctiforme et
• un élément agissant sur la lumière (2), selon l'une des revendications précédentes, disposé dans la direction de rayonnement en face de la source lumineuse (3).

7. Agencement d'éclairage selon la revendication 6, **caractérisé en ce qu'**un panneau transparent (10), plus particulièrement composé de PMMA, est disposé sur le côté extérieur de la zone de rayonnement de la lumière de l'élément agissant sur la lumière (2).

8. Agencement d'éclairage selon l'une des revendications de 6 à 7, **caractérisé en ce que** la source lumineuse (3) est configurée comme une diode électroluminescente.
